# EUROPEAN PATENT SPECIFICATION

(11) **EP 1 606 101 B1**
(45) Date of publication and mention of the grant of the patent: **02.01.2008**
(21) Application number: 04758237.4
(22) Date of filing: 24.03.2004
(51) Int. Cl.: B32B 1/06, B32B 1/08, B65D 53/00, B65D 53/04, C08F 8/00, C08L 91/00, C08L 23/04, C08L 23/10, C08L 23/20, C08L 23/22

(54) **TRANSPARENT CLOSURE CAP LINER HAVING OXYGEN BARRIER PROPERTIES**
TRANSPARENTE VERSCHLUSSKAPPENAUSKLEIDUNG MIT SAUERSTOFFSPERREIGENSCHAFTEN
GARNITURE DE BOUCHON DE FERMETURE TRANSPARENTE A PROPRIETES DE BARRIERE D'OXYGENE

(30) Priority: 27.03.2003 US 400304
(43) Date of publication of application: 21.12.2005
(73) Proprietor: Silgan White Cap Americas LLC, Downers Grove, IL 60515 (US)
(72) Inventor: BARANOWSKI, Thomas, R., Chicago, IL 60638 (US); CORMACK, Richard, W., Naperville, IL 60565 (US)
(74) Representative: Weiss, Wolfgang
(86) International application number: PCT/US2004/008915
(87) International publication number: WO 2004/087509

(56) References cited:
- EP-A- 0 926 215
- WO-A-02/14171
- GB-A- 1 152 465
- US-A- 4 256 234
- US-A- 5 381 914
- US-A- 5 843 577
- US-A- 5 955 163
- US-B1- 6 677 397

## Description

The present invention generally relates to improved oxygen barrier liner compositions for plastic closures and more particularly, to homogeneous liner compositions which are substantially transparent, provide an effective barrier to oxygen ingress into the containers, and provide good torque removal properties and adhesion to the plastic closure.

### BACKGROUND OF THE INVENTION

Closures for use in food and beverage containers include a closure shell formed of metal, plastic or both metal and plastic and are typically provided with a liner on the inner surface of the closure shell end panel. The liner is intended to provide a hermetic seal between the closure member and the container opening.

Nevertheless, oxygen can permeate the closure shell or enter through spaces between the closure shell and the container. Oxygen can adversely affect beverage and food products stored within a container since a small amount of oxygen can alter the taste of the beverage or food product or cause spoilage of the product. Accordingly, it is desirable that the liners be made of or include a material that is a barrier to oxygen. Efforts to provide a liner that is an effective barrier against oxidation of the food or beverage stored within a container are described in the prior art.

In addition to the many properties required for a liner (discussed below), it may also be desirable to provide a liner that is substantially transparent, so that printing on the inner surface of the closure end panel can be seen by the consumer. "Clear" liners are particularly desirable in promotional advertising where a message to the consumer is printed on the inner surface of the closure end panel.

U.S. Patent No. 5,955,163 to White discloses a gasket for closures used with beverage containers. The gasket is formed of a thermoplastic material which includes, for example, a hydrogenated co-polymer of styrene and conjugated diene or functionalized derivative thereof and a rubbery polymer such as butyl rubber which, according to this patent, further prevents ingress of oxygen and volatile odors. The gasket is used with metal crown caps. The patent does not disclose whether or not the liner is clear.

U.S.Patent Application Serial No. 09/638,240, discloses a plastic composition with improved oxygen barrier properties. The liner composition is a blend of a thermoplastic elastomer to which selected amounts of polyisobutylene and polybutylene are added. Slip agents, such as microcrystalline wax may also be added to the composition. The resulting liner provides good barrier properties, but is not clear (i.e., transparent).

Thus, it would be desirable to provide a liner which acts as an oxygen barrier and can be used in association with resealable plastic closures. It would also be desirable to provide a liner with oxygen barrier properties, and that is substantially transparent such that printing on the underside of the end panel of the closure is visible and clear.

In addition to providing a transparent liner that also acts as a barrier to oxygen, liners for use in food or beverage container closures should possess other properties. For example, the liner and the plastic compositions used for such liners must possess good to excellent adhesion to the inner surface of the closure preferably without the use of a separate adhesive.

Also, the sealing provided by the liner should not be such that it is difficult for the average user to open the container. Accordingly, the liner must have good "torque removal" properties to allow for easy removal (e.g., by unscrewing) of the cap without having to use excess force.

The liner should also be made of a composition that is easy to process. Some oil-based plasticizers, such as mineral oil, have been included in liner compositions to improve the processability of the composition. However, under certain conditions, extractable compounds from some plasticizers have been known to migrate from the liner composition to the stored food product. Thus, it would be desirable to provide a liner that is easy to process but (1) does not affect the taste of the stored food product, and (2) is substantially odorless.

It would also be desirable to provide a liner that can be easily formed into flat liners by known techniques such as injection molding and cold punch molding, and that can otherwise be easily incorporated into the closure.

A common challenge faced by those in the field of closure liners is that addition and/or removal of certain compounds, or adjustments to their relative amounts (to improve certain of their properties, such as processability), may result in a diminishment of other properties, such as the barrier property, torque removal and the clarity of the liner. Thus, it would be desirable to provide a liner that is easy to process without diminishing the other desirable properties identified above. The document WO 0214171 discloses a closure cap liners having oxygen barrier properties.

The plastic composition of the present invention and liners made from such plastic compositions address at least all of the above-described objectives.

### SUMMARY OF THE INVENTION

Plastic compositions of the type described above exhibit excellent oxygen barrier properties and, therefore, are useful in closures for food or beverage containers.

In one aspect, the present invention is directed to a closure cap liner composition comprising a blend of 40-75%, by weight, of one or more butyl-based compounds, 25-60%, by weight of a homopolymer of polypropylene and a copolymer of polypropylene wherein the ratio of homopolymer to copolymer is between 40:60 and 60:40 and 1-17%, by weight, of two or more lubricant-type additives.

In another aspect, the present invention is directed to a container closure comprising a plastic shell having an end panel and an integral skirt that extends downwardly from the periphery of the skirt. The end panel has an inner-facing surface and includes a substantially oxygen impermeant liner which is adhered to at least a portion of the inner-facing surface. The liner is made from a composition that is a blend of a selected quantity of a butyl rubber component, a polyolefin component, and two or more lubricant-type additives.

In a further aspect, the liners are substantially transparent.

### DETAILED DESCRIPTION OF THE DRAWINGS

Figure 1 is a side view of a plastic closure of the type used in connection with the present invention;

Figure 2 is a cross-sectional view of a container closure with a liner embodying the present invention adhered to the inner surface of the closure;

Figure 3 is a plan view of the inner surface of a closure with the liner of Figure 2 adhered to the inner-facing surface of the closure;

Figure 4 is a cross-sectional view of the closure of Figure 1 with the substantially transparent liner embodying the present invention adhered to the inner surface of the closure end panel.

### DETAILED DESCRIPTION OF THE INVENTION

The plastic composition of the present invention will be described below in the context of its preferred use, namely, as a liner for a plastic closure of a food or beverage container. It will be appreciated, however, that the plastic composition of the present invention is not limited to such use. The plastic composition of the present invention can be used in any other application where, for example, a substantially transparent material with oxygen barrier properties is desired, and/or where a material exhibiting excellent adhesion to a plastic substrate is desired.

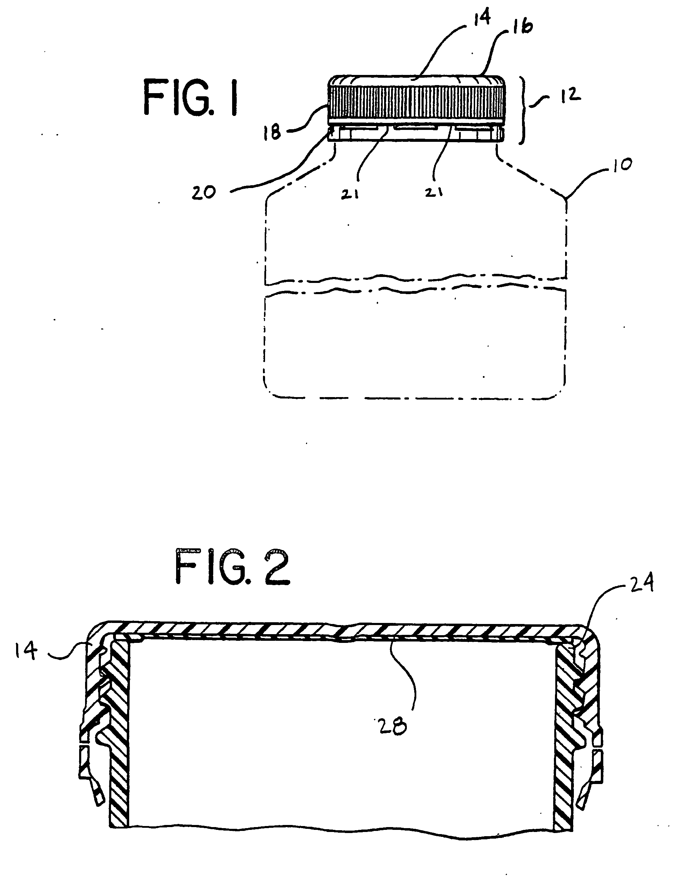

Referring to the drawings, Fig. 1 shows a container 10 with a closure 12 secured over the open mouth of the container 10. Closure 12 includes a shell generally designated by the reference numeral 14. Shell 14 includes an end panel 16 and a skirt 18. In the illustrated embodiment closure 12 further includes a tamper-evident band 20 integrally formed with and secured to the base of the skirt by a plurality of frangible bridges 21. Closure 12 can typically be made by, for example, injection molding from a thermoplastic composition such as, for example, a polyolefin including, but not limited to polypropylene. Closure 12 can also be made of polyethylene or a blend of polyethylene and polypropylene.

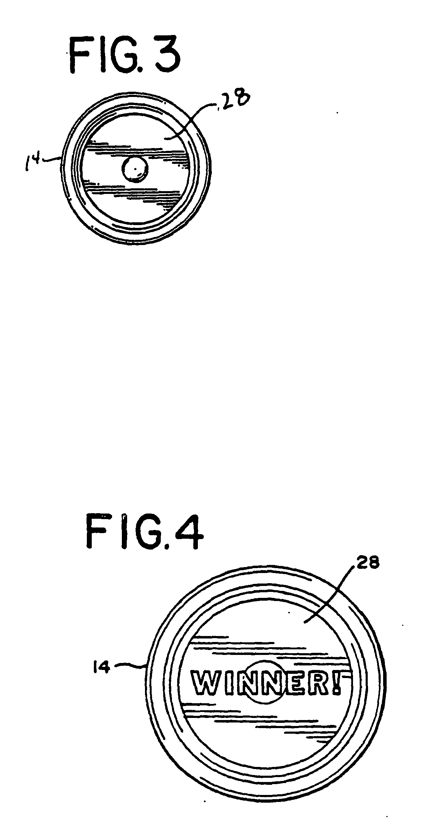

As best seen in Figure 2, shell 14 seals the open mouth of container 10 defined by end finish 24. As further shown in Figure 2, closure shell 14 includes a liner 28 adhered to the inner-facing surface of shell 14. Liner 28 can be in the shape of a circular disc or pad that covers substantially the entire inner-facing surface of end panel of shell 14 (Figs. 3 and 4). Alternatively, liner 14 can be in the shape of a ring which covers only the annular periphery of the inner-facing surface of the shell, as shown in U.S. Patent Application Serial No. 09/638,240. In any event, liner 28 should contact the end finish of the container walls to provide a hermetic seal between closure shell 14 and the opening and, thereby, limit oxygen ingress from the outside environment into the container interior. In a preferred embodiment, shown illustratively in Fig. 4, liner 14 is substantially transparent, such that printing on the inner surface of end panel 16 is readily readable and clear.

In one embodiment, the composition of the present invention may be a blend of selected amounts of one or more butyl-based rubbers, one or more polyolefins, and two or more lubricant-type additives.

In accordance with the present invention, synthetic butyl-based rubber(s) preferably make up the majority (in parts, by weight) of the composition blend. In one embodiment, the butyl-based rubber makes up between 40%-75%, by weight, of the composition blend. More preferably, butyl-based rubber makes up 55%-65% by weight of the composition blend. The butyl-based rubber component of the blend may be a single butyl-based rubber compound. More preferably, however, the butyl-based rubber component of the composition can include two or more butyl-based rubbers and/or itself be a blend of two or more butyl-based rubbers.

In one non-limiting example, the butyl-based component rubber can include, a selected amount of polyisobutylene. In a preferred embodiment, the polyisobutylene may be blended with a second butyl-based rubber. For example, in a preferred embodiment, polyisobutylene may be pre-blended or combined with a second butyl-based rubber that is itself a blend of polyisobutylene and another synthetic butyl-based rubber or a co-polymer of polyisobutylene. One example of a suitable polyisobutylene is available from Exxon Mobil under the name of Vistanex^{®} MM polyisobutylene, grade L-100. Other possible polyisobutylenes may include Vistanex^{®}, grades L-80 and L-120.

An example of the second butyl rubber (that may be blended with polyisobutylene) includes the grades known as Exxon^{®} butyl grade L-268. These Exxon^{®} butyl rubbers described above are co-polymers of isobutylene and isoprene. Suitable butyl rubbers are also available from Bayer Corporation.

It has been discovered that the combination of two separate butyl-based rubbers (of the type described above) results in a gasket or liner that provides many of the desired properties for a gasket or liner. For example, polyisobutylene, of the type described above is preferably included for its good barrier properties. Polyisobutylene also provides good adhesive properties, particularly to polypropylene shells commonly used in the closure industry. It has been discovered that combining the polyisobutylene with a selected amount of a second butyl rubber compound, of the type described above, improves flowability of the blend that, in turn, improves the processability of the composition. Also, combining a selected amount of the polyisobutylene with the second butyl-based rubber compound results in a reduced compression set. This means that the liner material is better able to rebound when it is compressed against the inside wall of the end panel of the closure, thus providing a tighter hermetic seal.

Thus, a blend of two or more butyl rubbers is preferred. While many different combinations and ratios of polyisobutylene and a second butyl-based rubber compound are possible, a ratio of polyisobutylene to the second butyl-based rubber compound of between 20:80 and 80:20 is desirable. More preferably, the ratio of polyisobutylene to the second butyl-based rubber compound can be between 40:60 and 60:40.

In accordance with the present invention, the composition blend also includes a polyolefinic component. Polyolefin is added to the above-described butyl rubbers to improve adhesion of the liner to the shell of the closure, and to improve the clarity of the liner. Where the shell is polypropylene, the blend of the present invention preferably includes a selected amount of a polypropylene homopolymer and co-polymer. Where the shell is polyethylene, a polyethylene homopolymer or co-polymer may be preferred.

The polyolefin of the blend is a blend of two or more polyolefins. For example, where the closure shell is made of polypropylene, the polyolefin component of the composition may be a co-polymer of polypropylene. In the composition of the present invention, a random or atactic co-polymer of polypropylene is preferred. The random co-polymer can be a co-polymer of polypropylene and polyethylene. An example of a preferred random copolymer of polypropylene and polyethylene is a random copolymer available from Atofina under the product designation PP 7825.

The composition can include a second polyolefin with the random polypropylene co-polymer. In one embodiment, this may be another polypropylene. Alternatively, and depending on the application, the polyolefin may be a polybutylene, polyethylene or other lower polyolefin. Homopolymers of polypropylene with a high melt flow, such as 100 g/10min and above are preferred. High melt flow homopolymers of polypropylene are available from a variety of sources. One particularly suitable polypropylene homopolymer is available from Atofina under the product code PP 3960.

In one embodiment, polypropylene homopolymer can be combined with a selected amount of a random co-polymer of propylene and another olefin. As described above, the random co-polymer may be a co-polymer of polypropylene and polyethylene. Combining the random co-polymer of polypropylene and polyethylene with the polypropylene homopolymer provides a liner with improved clarity, as compared to a blend where the polypropylene homopolymer is combined with a polyolefin co-polymer that is other than a random co-polymer, such as isotactic and syndiotactic co-polymers. In addition, a blend of the random co-polymer and polypropylene homopolymer provides a blend that has good flow characteristics. This improves processing of the composition and results in a blend that is not too stiff, and yet has a sufficient amount of hardness and sealability for use as a closure cap liner. A ratio of 60:40 to 40:60 random copolymer to homopolymer is preferred.

In addition to the butyl rubber component and polyolefinic component described above, the present invention further includes additional additives in smaller quantities that can be added to the blend. Inclusion of these additional additives, which generally fall into the category of lubricants, in large part, provides a plastic composition that possesses excellent torque removal properties. As previously indicated, while the liner used in a closure should provide excellent sealing, the sealing of the liner to the finish of the container must not be such that it is difficult for the average user to open the container. Accordingly, the liner must have good torque removal properties to allow for easy removal.

In accordance with the present invention, lubricant-type additives are added to the composition to improve torque removal. While lubricant-type additives such as certain waxes have, in the past, been added as slip agents to plastic compositions used for liners, too much of a particular lubricant-type additive can diminish other properties important to the function of the liner. For example, where too much of a lubricant such as microcrystalline wax is incorporated into the blend, adhesion of the composition to the inside surface of the end panel may be diminished.

It has been discovered that a blend or combination of two, three or more lubricant-type additives in the preferred amounts can improve the torque removal properties and improve processing without diminishing other properties of the liner, such as the barrier properties and the clarity. The combination of lubricant-type additives preferably will not exceed 17% (by weight) of the total composition. The individual lubricant additives used in the present composition should not exceed 10% and preferably do not exceed 5% by weight of the composition (based on total parts by weight of the butyl rubber component, polyolefinic component and lubricant-type additives). Lubricant-type additives that may be included are waxes, particularly microcrystalline waxes, silicones, certain amides and certain plasticizers, such as monoglycerides. In one embodiment, the lubricant-type additive component is a blend of several of these lubricant-type additives.

In one embodiment, the lubricant includes selected amounts of silicone, fatty amides, waxes and saturated monoglycerides. Silicones suitable for use in the composition of the present invention are available, for example, from Dow Corning, under the name DC200. Waxes, and particularly, microcrystalline waxes suitable for use in the present invention are also available from a variety of sources. One example of a preferred microcrystalline wax is available from Honeywell under the product designation OK6080. Fatty amides are also available from a variety of sources. The fatty amide, erucamide is available from Croda, under the name Incroslip C. Other suitable erucamides include Chemamide E, available from Crompton Corporation and Crodamide E, also available from Croda. Finally, the saturated monoglycerides are also available from several sources. One particular saturated monoglyceride, which is an acetic acid hydrogenated ester of monoglyceride derived from coconut oil, is available from Danisco, under the name Acetem 95CO.

In one embodiment, the composition can include effective amounts of microcyrstalline wax and a fatty amide, such as erucamide. Preferably, however, in addition to these two lubricant-type additives, the composition may further include an effective amount of another lubricant-type additive, such as silicone. Even more preferably, the composition still further includes an effective amount of a saturated monoglyceride.

The above-described compounds can be combined in amounts and proportions such that the plastic composition when formed into a liner for a closure provides excellent oxygen barrier properties, torque removal properties, adhesion to the polymeric shell, is easy to process, and is substantially transparent to allow a consumer to read printing on the inside surface of the end panel. Thus, in one particular embodiment, the plastic composition may include between 20-60 parts, by weight, of polyisobutylene, 20-60 parts, by weight, of another butyl rubber which is preferably a co-polymer of polyisobutylene and isoprene, 5-20 parts by weight of a homopolymer of polypropylene, 5-20 parts by weight of a random co-polymer of polypropylene and polyethylene, 1-19 parts by weight of a blend or combination of two, three or more of lubricant-type additives described above. In a particular example, the lubricant component includes two or more of 1-10 parts by weight of a microcrystalline wax, 1-10 parts by weight of a fatty amide, 1 to 10 parts by weight of a silicone, and 1 to 10 parts by weight of a saturated monoglyceride. More preferably, the composition includes all four of the above lubricant-type additives, wherein the maximum amount of each of the lubricant-type additives does not exceed 5 parts by weight of the composition (based on the total of parts by weight of the butyl rubber components, polyolefinic component and lubricant-type additives). Thus, in one embodiment, the composition can include 1.0-5.0 parts, by weight, of microcrystalline wax, 0.7-5.0 parts, by weight, of the fatty amide, 0.5-4.0 parts, by weight of a silicone and 1.0-5.0 parts, by weight of a saturated monoglyceride.

In a particularly preferred embodiment, the composition includes 35 parts by weight of the polyisobutylene, 40 parts by weight of a butyl rubber compound of the type described above, 12 parts by weight of a polypropylene homopolymer, 13 parts by weight of a random co-polymer of propylene and ethylene, 4 parts by weight of a microcrystalline wax, 5 parts by weight of a fatty amide such as erucamide, between 2.5 and 4.0 parts by weight of a silicone, and 4 parts by weight of saturated monoglyceride.

Finally, if desired, additional agents such as coloring and tinting agents or dyes may be added to provide the transparent liner composition with a desired color or tint.

The relative proportions and preferred quantities described above provide a plastic composition that can be made into an effective liner for a plastic closure with the properties described above. While adjustments to the above-described proportions are possible, it has been discovered that the amounts of the components significantly outside the ranges described above result in a liner with inferior properties as compared to liners that include the components in the above-described proportions. For example, too much polyisobutylene can result in a blend that is too soft and viscous and, as a result, is much more difficult to process. On the other hand, a lower amount of polyisobutylene will reduce the oxygen barrier properties of the liner.

Too much of the random co-polymer, to the exclusion of the homopolymer of polypropylene, results in a composition that does not have sufficient flow properties and, thus, is more difficult to process and form into a liner. A gasket or liner that cannot be easily compressed into the desired shape on the end panel of the closure may diminish the sealability of the closure cap to the container.

Significant deviations from the preferred amounts of the lubricant-type additives can also affect the properties of the liner. Liners made in accordance with the present invention, including the preferred lubricant-type additives in their preferred effective amounts, provide improved torque removal without diminishing other properties such as adhesion, barrier and clarity. In one example, closures (43mm) with liners of the present invention, including the four lubricant-type additives described above, typically had torque removal readings of less than 30 inch/lbs, at cold storage temperatures (38°F) and average readings of less than 25 inch/lbs, at room temperature using standard torque removal measuring equipment, such as an Electronic Torque Tester supplied by Secure Pak, Inc.
In accordance with the method for making the plastic composition, the above described compounds can be combined as follows. In one embodiment, the selected amounts of polyisobutylene and other butyl rubbers are first combined and mixed in a standard Banbury-type mixer for approximately 1 minute. The selected amounts of the polyolefinic compounds are next added, where the heat from the friction of the mixing causes the polyolefins to melt and begin to blend. Finally, the lubricant-type additives are then added either individually or as a pre-combined blend. The entire blend is then extruded into pellets which are punch pressed onto the inner surface of the closure end panel, in ways that are known to those of skill in the art.

Liners of the present invention which have been formed into discs or pads can have a thickness of 0.005-0.1 inches. More typically, the thickness of such liner discs or pads can be 0.012 inches, except that, as seen in Fig. 2, the thickness of the liner can be greater near or along the annular periphery of the liner where it contacts the end finish of the container. For example, in one embodiment the thickness of the liner near or along the annular periphery can be 0.01-0.05 inches and, more preferably, 0.027-0.039 inches. Such added thickness provides added barrier material where oxygen ingress is most likely to occur, namely, between the closure skirt and the container.

Liners of the present invention exhibit good to excellent oxygen barrier properties and are particularly useful liners for food and beverage containers. For example, using an oxygen permeability measuring apparatus, Model Ox-Tran2/61, available from MOCON^{®} of Minneapolis, Minnesota, closures with liners of the present invention have an oxygen ingress rate of typically less than .0125 cc/package/day at normal atmospheric conditions (and based on a 43 mm closure). Indeed, closures with liners of the present invention typically limit the oxygen ingress rate to .011cc/package/day at normal atmospheric conditions (and based on 43 mm closure). (Briefly, equipment of the type described above measures oxygen ingress by introducing nitrogen gas into a vessel sealed with a lined closure. The nitrogen gas flushes any oxygen that may be present, due to ingress through the closure, within the sealed vessel. The nitrogen gas exits the vessel through an outlet and the level of captured oxygen is recorded as an electronic signal and reported as cubic centimeters (cc) of oxygen permeating into a package (closure with liner) in a day. The reading is then adjusted to take into account barrier properties of the container or vessel to give a more accurate reading of oxygen ingress across the lined closure).

Compositions of the present invention include good tensile strength, elongation, hardness and specific gravity properties that make the composition suitable for use as a liner. In a preferred embodiment, the composition can have a tensile strength of 300 psi, an elongation of 500, a shore hardness of 65 Shore A and a specific gravity of 0.092.

The present invention has been described in the context of its preferred embodiments. It will be apparent to those skilled in the art, however, that modifications and variations therefrom can be made without departing from the spirit and scope of this invention. Accordingly, this invention is to be construed by the scope of the appended claims.

## Claims

1. A closure cap liner composition comprising a blend of:
40-75%, by weight, of one or more butyl-based compounds;
25-60%, by weight, of a homopolymer of polypropylene and a co-polymer of polypropylene wherein the ratio of homopolymer to co-polymer is between 40:60 and 60:40, and
1-17%, by weight, of two or more lubricant- type additives.

2. The composition of Claim 1 wherein one or more said butyl- based compounds include polyisobutylene and butyl rubber.

3. The composition of Claim 2 wherein the ratio of polyisobutylene to butyl rubber is between 40:60 and 60:40.

4. The composition of Claim 1 wherein said lubricant-type additives are selected from the group consisting of silicone, fatty amide, microcrystalline wax and saturated monoglyceride.

5. The composition of Claim 1 comprising:
20-60 parts, by weight, polyisobutylene;
20-60 parts, by weight, butyl rubber;
5-20 parts, by weight, polypropylene co- polymer;
5-20, parts, by weight, polypropylene homopolymer;
1-10 parts, by weight, microcrystalline wax;
1-10, parts by weight, fatty amide;
1-10 parts, by weight, silicone; and
1-10 parts, by weight, saturated monoglyceride.

6. The composition of Claim 5 comprising:
35 parts, by weight, polyisobutylene;
40 parts, by weight, butyl rubber;
13 parts, by weight, polypropylene co- polymer;
12, parts, by weight, polypropylene homopolymer;
4 parts, by weight, microcrystalline wax;
5, parts by weight, fatty amide;
2.5-4 parts, by weight, silicone; and
4 parts, by weight, saturated monoglyceride.

7. The composition of Claim 1 wherein said blend is transparent.

8. A closure comprising:
a plastic shell having an end panel and an integral skirt downwardly extending from the periphery thereof, said end panel having an inner surface; a liner adhered to said inner surface of said end panel wherein said liner comprises a blend of one or more butyl-rubber compounds, a homopolymer of polypropylene and a co-polymer of polypropylene wherein the ratio of homopolymer to co-polymer is between 40:60 and 60:40, and two or more lubricant- type additives.

9. The closure of Claim 8 wherein said liner is substantially transparent.

10. The closure of Claim 9 wherein said end panel includes printing.

11. The closure of Claim 10 wherein said liner comprises a blend of:
40-75%, by weight, of one or more butyl-based compounds;
25-60%, by weight, of a one or more polyolefinic compounds; and
1-17%, by weight, of two or more lubricant- type additives.

12. The closure of Claim 11 wherein one or more said butyl-based compounds include polyisobutylene and butyl rubber.

13. The closure of Claim 11 wherein said lubricants are selected from the group consisting of silicone, fatty amide, microcrystalline wax and saturated monoglyceride.

14. The closure of Claim 12 wherein the ratio of polyisobutylene to butyl rubber is between approximately 40: 60 and 60: 40.

15. The closure of Claim 8 comprising:
20-60 parts, by weight, polyisobutylene;
20-60 parts, by weight, butyl rubber;
5-20 parts, by weight, polypropylene co- polymer;
5-20, parts, by weight, polypropylene homopolymer;
1-10 parts, by weight, microcrystalline wax;
1-10, parts by weight, fatty amide;
1-10 parts, by weight, silicone; and
1-10 parts, by weight, saturated monoglyceride.

## Patentansprüche

1. Zusammensetzung für eine Verschlusskappenauskleidung umfassend ein Gemisch aus:
40-75 Gewichts-% von einer oder mehreren Verbindungen auf Butyl-Basis;
25-60 Gewichts-% von einem Polypropylen-Homopolymer und einem Polypropylen-Copolymer, wobei das Verhältnis von Homopolymer zu Copolymer zwischen 40:60 und 60:40 ist, und
1-17 Gewichts-% von zwei oder mehreren Schmiermittel-artigen Additiven.

2. Zusammensetzung nach Anspruch 1, wobei die eine oder mehreren Verbindungen auf Butyl-Basis Polyisobutylen und Butylkautschuk umfassen.

3. Zusammensetzung nach Anspruch 2, wobei das Verhältnis von Polyisobutylen zu Butylkautschuk zwischen 40:60 und 60:40 ist.

4. Zusammensetzung nach Anspruch 1, wobei die Schmiermittel-artigen Additive ausgewählt sind aus der Gruppe bestehend aus Silikon, Fettamid, mikrokristallinem Wachs und gesättigtem Monoglycerid.

5. Zusammensetzung nach Anspruch 1, umfassend:
20-60 Gewichtsteile Polyisobutylen,
20-60 Gewichtsteile Butylkautschuk,
5-20 Gewichtsteile Polypropylen-Copolymer,
5-20 Gewichtsteile Polypropylen-Homopolymer,
1-10 Gewichtsteile mikrokristallines Wachs,
1-10 Gewichtsteile Fettamid,
1-10 Gewichtsteile Silikon und
1-10 Gewichtsteile gesättigtes Monoglycerid.

6. Zusammensetzung nach Anspruch 5, umfassend:
35 Gewichtsteile Polyisobutylen,
40 Gewichtsteile Butylkautschuk,
13 Gewichtsteile Polypropylen-Copolymer,
12 Gewichtsteile Polypropylen-Homopolymer,
4 Gewichtsteile mikrokristallines Wachs,
5 Gewichtsteile Fettamid,
2,5-4 Gewichtsteile Silikon und
4 Gewichtsteile gesättigtes Monoglycerid.

7. Zusammensetzung nach Anspruch 1, wobei das Gemisch transparent ist.

8. Verschluss, umfassend eine Kunststoffhülle mit einem Endelement und einer eingebauten Randleiste, welche sich am Umfang davon nach unten erstreckt und wobei das Endelement eine Innenoberfläche aufweist; ein Auskleidungselement, welches von der Innenoberfläche des Endelements festgehalten ist, wobei das Auskleidungselement ein Gemisch aus einer oder mehreren Butylkautschukverbindungen, ein Polypropylen-Homopolymer und ein Polypropylen-Copolymer, wobei das Verhältnis des Homopolymers zum Copolymer zwischen 40:60 und 60:40 ist, und zwei oder mehrere Schmiermittel-artige Additive umfasst.

9. Verschluss nach Anspruch 8, wobei das Auskleidungselement im Wesentlichen transparent ist.

10. Verschluss nach Anspruch 9, wobei das Endelement einen Aufdruck umfasst.

11. Verschluss nach Anspruch 10, wobei das Auskleidungselement ein Gemisch umfasst aus:
40-75 Gewichts-% von einer oder mehreren Verbindungen auf Butyl-Basis,
25-60 Gewichts-% von einer oder mehreren polyolefischen Verbindungen, und
1-17 Gewichts-% von einem oder mehreren Schmiermittel-artigen Additiven.

12. Verschluss nach Anspruch 11, wobei die eine oder mehreren Verbindungen auf Butyl-Basis Polyisobutylen und Butylkautschuk umfassen.

13. Verschluss nach Anspruch 11, wobei die Schmiermittel ausgewählt sind aus der Gruppe bestehend aus Silikon, Fettamid, mikrokristallinem Wachs und gesättigtem Monoglycerid.

14. Verschluss nach Anspruch 12, wobei das Verhältnis von Polyisobutylen und Butylkautschuk zwischen 40:60 und 60:40 ist.

15. Verschluss nach Anspruch 8, umfassend:
20-60 Gewichtsteile Polyisobutylen,
20-60 Gewichtsteile Butylkautschuk,
5-20 Gewichtsteile Polypropylen-Copolymer,
5-20 Gewichtsteile Polypropylen-Homopolymer,
1-10 Gewichtsteile mikrokristallines Wachs,
1-10 Gewichtsteile Fettamid,
1-10 Gewichtsteile Silikon und
1-10 Gewichtsteile gesättigtes Monoglycerid.

## Revendications

1. Composition de garniture de bouchon de fermeture comprenant un mélange de :
40 à 75 % en poids d'un ou de plusieurs composés à base de butyle ;
25 à 60 % en poids d'un homopolymère de polypropylène et d'un copolymère de polypropylène, dans lequel le rapport homopolymère sur copolymère se situe entre 40 : 60 et 60 : 40, et
1 à 17 % en poids de deux additifs de type lubrifiant ou plus.

2. Composition selon la revendication 1, dans laquelle un ou plusieurs desdits composés à base de butyle comprennent un polyisobutylène et un caoutchouc butyle.

3. Composition selon la revendication 2, dans laquelle le rapport polyisobutylène sur caoutchouc butyle se situe entre 40 : 60 et 60 : 40.

4. Composition selon la revendication 1, dans laquelle lesdits additifs de type lubrifiant sont choisis dans le groupe constitué par la silicone, un amide gras, une cire microcristalline et un monoglycéride saturé.

5. Composition selon la revendication 1, comprenant :
20 à 60 parties en poids de polyisobutylène ;
20 à 60 parties en poids de caoutchouc butyle ;
5 à 20 parties en poids de copolymère de polypropylène ;
5 à 20 parties en poids d'homopolymère de polypropylène ;
1 à 10 parties en poids de cire microcristalline ;
1 à 10 parties en poids d'amide gras ;
1 à 10 parties en poids de silicone ; et
1 à 10 parties en poids de monoglycéride saturé.

6. Composition selon la revendication 5, comprenant :
35 parties en poids de polyisobutylène ;
40 parties en poids de caoutchouc butyle ;
13 parties en poids de copolymère de polypropylène ;
12 parties en poids d'homopolymère de polypropylène ;
4 parties en poids de cire microcristalline ;
5 parties en poids d'amide gras ;
2,5 à 4 parties en poids de silicone ; et
4 parties en poids de monoglycéride saturé.

7. Composition selon la revendication 1, dans laquelle ledit mélange est transparent.

8. Bouchon comprenant :
une coque en plastique possédant un panneau d'extrémité et une jupe intégrale se prolongeant vers le bas à partir de la périphérie du panneau d'extrémité, ledit panneau d'extrémité possédant une surface interne ; une garniture adhérant à ladite surface interne dudit panneau d'extrémité, ladite garniture comprenant un mélange composé d'un ou de plusieurs composés de type caoutchouc butyle, d'un homopolymère de polypropylène et d'un copolymère de polypropylène dans lequel le rapport homopolymère sur copolymère se situe entre 40 : 60 et 60 : 40, et deux additifs de type lubrifiant ou plus.

9. Bouchon selon la revendication 8, dans lequel ladite garniture est essentiellement transparente.

10. Bouchon selon la revendication 9, dans lequel ledit panneau d'extrémité comprend une impression.

11. Bouchon selon la revendication10, dans lequel ladite garniture comprend un mélange de :
40 à 75 % en poids d'un ou de plusieurs composés à base de butyle ;
25 à 60 % en poids d'un ou de plusieurs composés polyoléfiniques ; et
1 à 17 % en poids de deux additifs de type lubrifiant ou plus.

12. Bouchon selon la revendication 11, dans lequel lesdits composés à base de butyle comprennent le polyisobutylène et le caoutchouc butyle.

13. Composition selon la revendication 11, dans laquelle lesdits lubrifiants sont choisis dans le groupe constitué par la silicone, un amide gras, une cire microcristalline et un monoglycéride saturé.

14. Bouchon selon la revendication 12, dans lequel le rapport polyisobutylène sur caoutchouc butyle se situe approximativement entre 40 : 60 et 60 : 40.

15. Bouchon selon la revendication 8, comprenant :
20 à 60 parties en poids de polyisobutylène ;
20 à 60 parties en poids de caoutchouc butyle ;
5 à 20 parties en poids de copolymère de polypropylène ;
5 à 20 parties en poids d'homopolymère de polypropylène ;
1 à 10 parties en poids de cire microcristalline ;
1 à 10 parties en poids d'amide gras ;
1 à 10 parties en poids de silicone ; et
1 à 10 parties en poids de monoglycéride saturé.
